# EUROPEAN PATENT APPLICATION

(11) **EP 1 786 203 A2**
(43) Date of publication of application: **16.05.2007**
(21) Application number: 06023266.7
(22) Date of filing: 08.11.2006
(51) Int. Cl.: H04N 5/775

(54) **Reproduction system and server**

(30) Priority: 10.11.2005 JP 2005326113
(71) Applicant: Funai Electric Co., Ltd., Daito-shi, Osaka 574-0013 (JP)
(72) Inventor: Fujie, Hidekatsu, Daito-shi Osaka 574-0013 (JP)
(74) Representative: Grünecker, Kinkeldey, Stockmair & Schwanhäusser Anwaltssozietät

(57) **Abstract**

A server (2) connected to a reproduction device (1) for reproducing video data and/or audio data recorded in a recording medium, and transmits the reproduced data through a radio communication network, to a client terminal unit (3). The server (2) includes: a breakage detecting part (24, 26B) to detect a breakage of connection by the network between the server (2) and the client terminal unit (3); a suspension control part (24, 26C) to generate a suspension control signal to make the reproduction device (1) temporarily stop reproduction of the video data and/or audio data by the reproduction device when the breakage of connection is detected by the breakage detecting part; a reconnection detecting part (24, 26B) to detect reconnection by the network between the server and the client terminal unit; and a resumption control part (24, 26D) to generate a resumption control signal for making the reproduction device resume reproduction when the reconnection is detected by the reconnection detecting part.

## Description

### BACKGROUND OF THE INVENTION

### Field of the Invention

The present invention relates to a reproduction system and a server.

### Description of Related Art

A contents-output system of a network type, which is provided with a server supplying contents, such as video data and audio data, and a client terminal unit connected to the server via the Internet and capable of outputting, by receiving the contents, both images and sounds based on the contents, is known in earlier developments (refer to, for example, JP-2004-274718A: Document 1; JP-2004-102415A: Document 2; JP-2004-096160A: Document 3; and JP-2005-184783A: Document 4).

Furthermore, a reproduction system which includes a server connected to a reproduction device for, such as a DVD, and a client terminal unit connected to the server via, for example, radio and outputting, by receiving video data and audio data stored in a DVD, images and sounds based on those video data and the audio data, is also known in the earlier developments.

As the connection between the server and the client terminal unit in the above-mentioned reproduction system may be broken in some cases by some reasons, an improved system has been proposed, in which the position information and the time information in the contents of the data that was being outputted when the connection was broken is memorized so that the client terminal unit can resume outputting, when breakage of the connection has been restored, the data from the data that was being outputted when the connection was broken, based on the memorized position information and the time information (refer to Documents 1 and 2 mentioned above).

Further, another improved system has been proposed, in which the images and the sounds that are being outputted are prevented from being abutted, by reducing the quantity of the data to be transmitted when the condition of the connection between the server and the client terminal unit is deteriorated (refer to, for example, Document 3).

However, even though the position information and the time information of the data which was being reproduced when the connection between the server and the client terminal unit was broken, is used, as described in Document 2 or 3, it is not possible, in the case of the reproduction of, for example, the DVD, to resume reproduction of the data from the data that was being reproduced when the connection was broken, because a reproduction commencement position can be designated only for every chapter. Furthermore, it is not possible to utilize the method disclosed in Document 3 in the case that the connection between the server and the client terminal unit was broken.

### SUMMARY OF THE INVENTION

An object of the present invention is to provide a reproduction system and a server, which can resume reproduction of data from a preferable position when the connection between the server and a client terminal unit has been restored, even though such connection was broken.

In accordance with a first aspect of the invention, the reproduction system includes a reproduction device to reproduce video data and/or audio data recorded in a recording medium, and a server which is connected to the reproduction device and transmits, through a radio communication network, the video data and/or audio data reproduced by the reproduction device to a client terminal unit, wherein the server includes:
a breakage detecting part to detect a breakage of connection by the radio communication network between the server and the client terminal unit;
a suspension control signal generating part to generate a suspension control signal to make the reproduction device temporarily stop reproduction of the video data and/or audio data by the reproduction device, when the breakage of connection by the radio communication network between the server and the client terminal unit is detected by the breakage detecting part;
a reconnection detecting part to detect reconnection by the radio communication network between the server and the client terminal unit;
a resumption control signal generating part to generate a resumption control signal for making the reproduction device resume reproduction of the video data and/or audio data, when the reconnection by the radio communication network between the server and the client terminal unit is detected by the reconnection detecting part; and
a light emission section to output an operation signal received from the client terminal unit, to the reproduction device in a form of light, and further to output the suspension control signal and the resumption control signal to the client terminal unit, and
the reproduction device includes:
   a light reception section to receive the operation signal, the suspension control signal and the resumption control signal, which are outputted from the light emission section; and
   a reproduction control part to control reproduction of the video data and/or audio data recorded in the recording medium, according to the operation signal, the suspension control signal and the resumption control signal, received by the light reception section.

According to the first aspect of the invention, in a server, a breakage detection part detects breakage of connection by a radio communication network between the server and a client terminal unit, a suspension control signal generating part generates a suspension control signal for temporarily stopping reproduction of video data and/or audio data by a reproduction device when the breakage of the radio communication network has been detected by the breakage detection part, a restoration detection part detects restoration of the connection by the radio communication network between the server and the client terminal unit, a resumption control signal generating part generates the resumption control signal to resume the reproduction of the video data and/or the audio data by the reproduction device when the restoration detection part detects the restoration of the connection by the radio communication network between the server and the client terminal unit, and the light emission section outputs a suspension control signal and the resumption control signal, in the form of light energy, which are received from the client terminal unit, to the reproduction device, and in the reproduction device, a light reception section receives the suspension control signal and the resumption control signal, and a reproduction control part controls the reproduction of the video data and the audio data recorded in the recording medium, based on the suspension control signal and the resumption control signal received by the light reception section.

Accordingly, as the reproduction of the video data and/or the audio data can be temporarily stopped when the breakage of the connection by the radio communication network between the server and the client terminal unit has occurred, and the reproduction of the video data and/or the audio data are resumed when the connection by the radio communication network between the server and the client terminal unit has been restored, from the suspended or temporarily stopped position, it would be possible for the reproduction system according to the invention claimed in Claim 1, to resume more reliably the reproduction of the video data and audio data from the position where the reproduction of those data were temporarily stopped or from those data that were being reproduced when the breakage of the connection occurred. Therefore, the reproduction of those data is resumed from a preferable position even in the case that the connection between the server and the television receiver by the radio communication network has been broken.

Moreover, as the suspension control signal and the resumption control signal are outputted to the reproduction device in the form of light energy by the light emission section which outputs the operation signals received from the client terminal unit, the light emission section in existence can be utilized for outputting the suspension control signal and the resumption control signal to the reproduction device. Therefore, outputting the suspension control signal and the resumption control signal can be easily realized.

In accordance with a second aspect of the invention, the server is connected to a reproduction device for reproducing video data and/or audio data recorded in a recording medium, and transmits, through a radio communication network, the video data and/or audio data reproduced by the reproduction device to a client terminal unit, wherein the server includes:
a breakage detecting part to detect a breakage of connection by the radio communication network between the server and the client terminal unit;
a suspension control part to generate a suspension control signal to make the reproduction device temporarily stop reproduction of the video data and/or audio data by the reproduction device, when the breakage of connection by the radio communication network between the server and the client terminal unit is detected by the breakage detecting part;
a reconnection detecting part to detect reconnection by the radio communication network between the server and the client terminal unit; and
a resumption control part to generate a resumption control signal for making the reproduction device resume reproduction of the video data and/or audio data, when the reconnection by the radio communication network between the server and the client terminal unit is detected by the reconnection detecting part.

According to the second aspect of the invention, the breakage detection part detects the breakage of the radio communication network between the server and the client terminal unit, the suspension control signal generating part generates and outputs to the reproduction device the suspension control signal for temporarily stopping the reproduction of the video data and/or the audio data by the reproduction device when the breakage of the radio communication network has been detected by the breakage detection part, the restoration detection part detects the restoration of the connection by the radio communication network between the server and the client terminal unit, and the resumption control signal generating part generates and outputs to the reproduction device the resumption control signal to resume the reproduction of the video data and/or the audio data by the reproduction device, when the restoration detection part detects the restoration of the connection by the radio communication network between the server and the client terminal unit.

Accordingly, as the reproduction of the video data and/or the audio data can be temporarily stopped when the breakage of the connection by the radio communication network between the server and the client terminal unit has occurred and the reproduction of the video data and/or the audio data is resumed, from the suspended or temporarily stopped position, when the connection by the radio communication network between the server and the client terminal unit has been restored, it would be possible for the server according to the second aspect of the invention, to resume more reliably the reproduction of the video data and audio data from the position where the reproduction of those data were temporarily stopped or from those data that were being reproduced when the breakage of the connection occurred. Therefore, the reproduction of those data is resumed from a preferable position even in the case that the connection between the server and the television receiver by the radio communication network has been broken.

Preferably, the server further includes a signal outputting section to output operation signals received from the client terminal unit to the reproduction device, wherein the suspension control signal and the resumption control signal are outputted from the signal outputting section to the reproduction device.

According to the server having such a structure, the same advantages as obtained by the second aspect of the invention can be obtained, and moreover, as the signal outputting section, which outputs the operation signals received from the client terminal unit to the reproduction device, outputs the suspension control signal and the resumption control signal to the reproduction device, the signal outputting section in existence can be utilized for outputting the suspension control signal and the resumption control signal to the reproduction device and, therefore, outputting the suspension control signal and the resumption control signal can be easily realized.

In accordance with a third aspect of the invention, the reproduction system includes a reproduction device to reproduce video data and/or audio data recorded in a recording medium, and a server which is connected to the reproduction device and transmits, through a radio communication network, the video data and/or audio data reproduced by the reproduction device to a client terminal unit, wherein the server includes:
a breakage detecting part to detect a breakage of connection by the radio communication network between the server and the client terminal unit;
a suspension control part to generate a suspension control signal to make the reproduction device temporarily stop reproduction of the video data and/or the audio data by the reproduction device, when the breakage of connection has been detected by the breakage detecting part, and to output the suspension control signal to the reproduction device;
a reconnection detecting part to detect reconnection by the radio communication network between the server and the client terminal unit; and
a resumption control part to generate a resumption control signal for resuming the reproduction of the video data and/or audio data by the reproduction device, when the reconnection by the radio communication network between the server and the client terminal unit is detected by the reconnection detecting part, and to output the resumption control signal to the reproduction device; and
the reproduction device includes:
   a signal reception section to receive the suspension control signal and the resumption control signal outputted from the server; and
   a reproduction control part to control reproduction of the video data and/or audio data recorded in the recording medium, according to the suspension control signal and the resumption control signal which are received by the signal reception section.

According to the third aspect of the invention, in the server, the breakage detection part detects the breakage of the radio communication network between the server and the client terminal unit, the suspension control signal generating part generates and outputs to the reproduction device the suspension control signal for temporarily stopping the reproduction of the video data and/or the audio data by the reproduction device when the breakage of the connection by the radio communication network between the server and the client terminal unit has been detected by the breakage detection part, the restoration detection part detects the restoration of the connection by the radio communication network between the server and the client terminal unit, and the resumption control signal generating part generates and outputs to the reproduction device the resumption control signal to resume the reproduction of the video data and/or the audio data by the reproduction device when the restoration detection part detects the restoration of the connection by the radio communication network between the server and the client terminal unit, and in the reproduction device, the signal reception section receives the suspension control signal and the resumption control signal, and the reproduction control part controls the reproduction of the video data and the audio data recorded in the recording medium based on the suspension control signal and the resumption control signal which are received by the signal reception .

Accordingly, as the reproduction of the video data and/or the audio data can be temporarily stopped when the breakage of the connection by the radio communication network between the server and the client terminal unit has occurred and the reproduction of the video data and/or the audio data is resumed, from the suspended or temporarily stopped position, when the connection by the radio communication network between the server and the client terminal unit has been restored, it would be possible for the reproduction system according to the invention claimed in Claim 4, to surely resume the reproduction of the video data and the audio data from the data that were being reproduced when the breakage of the connection occurred. Therefore, the reproduction of those data is resumed from a preferable position even in the case that the connection between the server and the television receiver by the radio communication network has been broken.

### BRIEF DESCRIPTION OF THE DRAWINGS

The present invention will become more fully understood from the detailed description given hereinafter and the accompanying drawings which are given by way of illustration only, and thus are not intended as a definition of the limits of the scope of the invention, and wherein:
FIG. 1 shows the structure of a reproduction system according to an embodiment of the invention;
FIG. 2 is a block diagram showing the structure of a server according to an embodiment of the invention;
FIG. 3 is a block diagram showing the structure of a DVD player in a reproduction system according to an embodiment of the invention; and
FIG. 4 is a flowchart for explanation of the operation of a server according to an embodiment of the invention.

### DETAILED DESCRIPTION OF THE PREFERRED EMBODIMENTS

One of the preferred embodiments of the reproduction system and the server, which embodies the invention, will be explained hereinafter with reference to the drawings attached herewith.

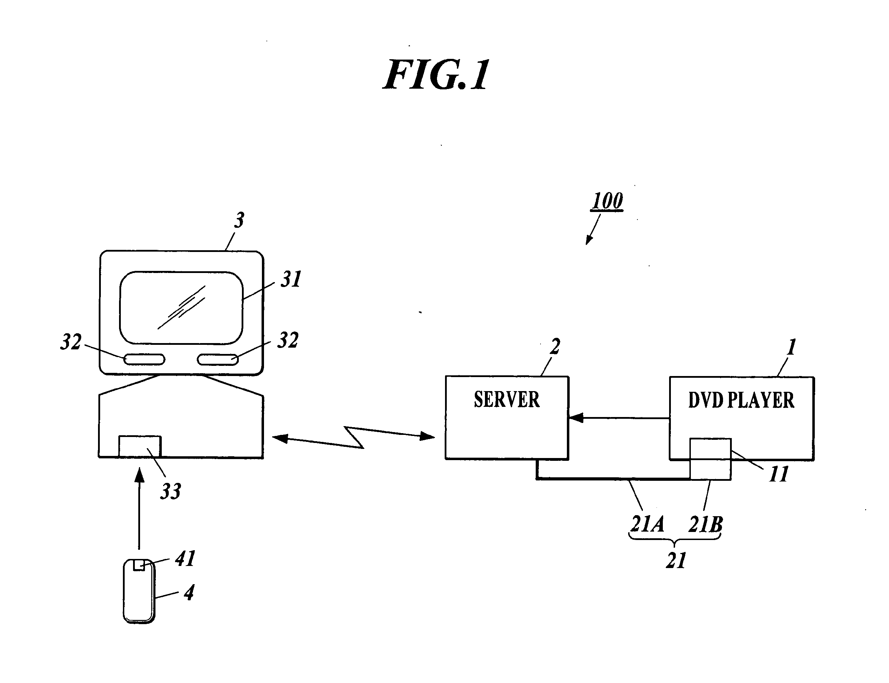

As shown in FIG. 1, the reproduction system 100 according to the invention includes, for example, a DVD player 1 as a reproduction device, a server 2 connected to the DVD player 1, a television receiver 3 as a client terminal unit which is connected to the server 2 via a radio communication network, and a remote controller 4 for inputting operation signals to the television receiver 3, the server 2, the DVD player 1.

The DVD player 1 is, for example, connected to the server 2, reproduces video data and audio data stored in a DVD (not shown) as a recording medium, and inputs those reproduced video data and audio data to the server 2. The DVD player 1 includes, for example, a light reception section 11 as a signal reception section which receives light from a light emission section 21 (which will be explained hereinafter) as a signal outputting section of the server 2.

The server 2 transmits the video data and the audio data, both inputted from the DVD player 1, to the television receiver 3 through the radio communication network. The server 2 includes the light emission section 21 for inputting control signals which are based on the operation signals received from the television receiver 3, to the DVD player 1.

The light emission section 21 includes, for example, an optical cable 21A for transmitting the control signals which are based on the operation signals received from the television receiver 3, and an LED 21B mounted at the top end of the optical cable 21A, and emits light corresponding to the control signals. The light emission section 21 further emits light which corresponds to a suspension control signal and a resumption control signal, both generated by a signal generating circuit 23 (will be explained later), and functions as a signal outputting section. It is to be noted that the optical cable 21A is not indispensable for the light emission section so long as the light emitted from the light emission section 21 can be received by the light reception section 11.

The television receiver 3 includes, for example, a display section 31 and loud speakers 32, receives the video data and audio data from the server 2 through the radio communication network, and reproduces images and sounds by the display section 31 and the loud speakers 32. The television receiver 3 includes, for example, a light reception section 33 for remote controlling to receive the light from a light emission section 41 of a remote controller 4.

The remote controller 4 includes, for example, a various keys (not shown) for inputting the operation signals and the light emission section 41 for outputting the operation signals to the television receiver 3.

The operation signals outputted from the light emission section 41 for remote controlling are received by the light reception section 33 for remote controlling of the television receiver 3.

The operation signals received by the television receiver 3 through the light reception part 33 for remote controlling are transmitted to the server 33 through the radio communication network.

The operation signals received by the server 2 are converted into control signals by a signal generating circuit 23 (will be described later), and inputted from the light emission section 21 of the server 2 to the light reception section 11 of the DVD player 1.

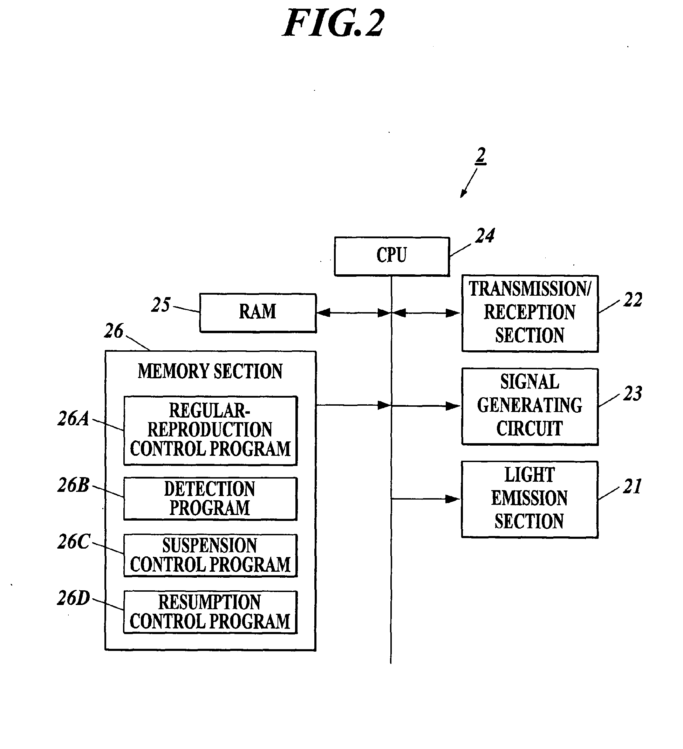

The server 2 includes and is constructed by, for example and as shown in FIG. 2, a transmission/reception part 22, the signal generating circuit 23 as a suspension control signal generating part and a resumption control signal generating part, a CPU (Central Processing Unit) 24, a RAM (Random Access Memory) 25 and a memory section 26.

The transmission/reception part 22 includes and is constructed by, for example, an RF module, and performs radio communication with the television receiver 3.

The signal generating circuit 23 generates, for example, control signals for operating the DVD player 1 based on the operation signals received through the radio communication network. Further, the signal generating circuit 23 is controlled, for example, by the CPU 24 executing a suspension control program 26C and a resumption control program 26D, and generates a suspension control signal and a resumption control signal. Accordingly, it functions as a suspension control signal generating part and a resumption control signal generating part.

The CPU 24 controls whole operation of the server 2 by reading out processing programs stored in the memory section 26, developing those programs in a RAM 25, and executing the processings.

The RAM 25 develops the processing programs and the like which are executed by the CPU 24, in its program storage areas and stores processed results which are produced when the input data is processed or the processing program is executed, in its data storage areas.

The memory section 26 includes, for example, a recording medium (not shown) in which programs and data are previously stored. This recording medium is constituted by, for example, semiconductor memories. The memory section 26 stores various data, various processing programs, and data processed by the execution of those programs, for realizing the function that enables the CPU to control overall operation of the server 2. More specifically, the memory section 26, as shown in FIG. 2, stores, for example, an regular-reproduction control program 26A, a detecting program 26B, a suspension control program 26C, and a resumption control program 26D.

The regular-reproduction control program 26A is, for example, a program that causes the CPU to perform functions to control (1) the signal generating circuit 23 so that it generates the control signal based on the operation signal which is received through the radio communication network, (2) the light emission section 21 so that it outputs the control signal to the DVD player, and (3) the transmission/reception part 22 so that it transmits the video data and audio data, which are inputted from the DVD player 1, to the television receiver 3 through the radio communication network.

The detection program 26B is, for example, a program that causes the CPU to perform a function to control the transmission/reception part 22 so that the latter detects the breakage and the restoration of the radio communication network. Accordingly, the CPU 24 functions as a breakage detection tool and a restoration detection tool when the detection program 26C is executed.

The suspension control program 26C is, for example, a program that causes the CPU to perform a function to control, when the breakage of the radio communication network is detected, (1) the signal generating circuit 23 so that it generates the suspension control signal for temporarily stopping the reproduction of the video data and the audio data, and (2) the light emission section 21 so that it outputs the suspension control signal to the DVD player 3, and thereby controlling the DVD player 1 so that it temporarily stops the reproduction of the video data and the audio data at the position where the reproduction is performed. Accordingly, the CPU 24 functions as a suspension control tool when the suspension control program is executed.

The resumption control program 26D is, for example, a program that causes the CPU to perform a function to control, when the restoration of the radio communication network is detected, (1) the signal generating circuit 23 so that it generates the resumption control signal for resuming the reproduction of the video data and the audio data, and (2) the light emission section 21 so that it outputs the resumption control signal to the DVD player 3, and thereby controlling the DVD player 1 so that it resumes the reproduction of the video data and the audio data from the position where the reproduction of those data were temporarily stopped. Accordingly, the CPU 24 functions as a resumption control tool when the resumption control program 26D is executed.

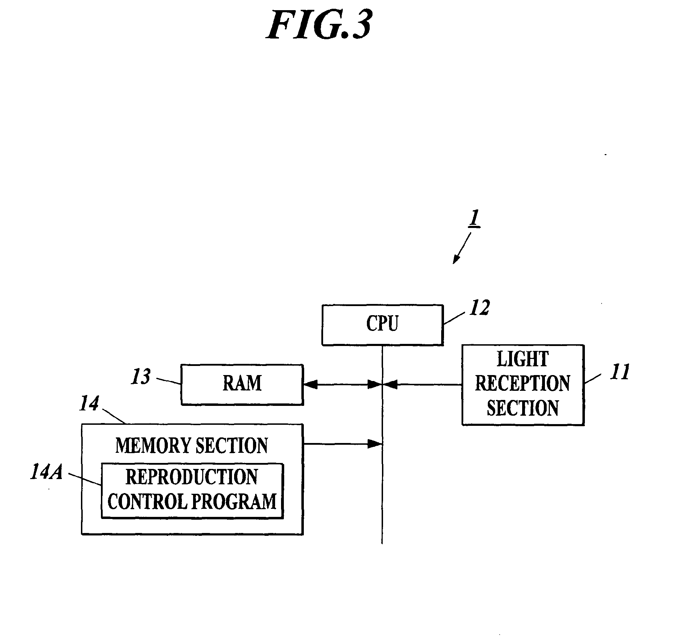

The DVD player 1 includes and is constructed by, as shown in FIG. 3, a CPU (Central Processing Unit) 12, a RAM (Random Access Memory) 13, and a memory section 14.

The CPU 12 reads out the processing programs stored in the memory section 14, develops them in the RAM 13, and executes them for controlling overall operation of the DVD player 1.

The RAM 13 stores the processing program executed by the CPU 12 in its program storage area. The RAM 13 also stores in its data storage area input data and processed results produced when the processing program is executed.

The memory section 14 includes, for example, a recording medium (not shown) in which various programs and data are previously stored. This recording medium may be composed of semiconductor memories. The memory section 14 stores, in order to cause the CPU to control the overall operation of the DVD player 1, various data, various programs, and data processed by the execution of those programs. More specifically, the memory section 14 stores, for example, as shown in FIG. 3, a reproduction control program 14A and the like.

The reproduction control program 14A is, for example, a program that causes the CPU 12 to perform a function to control reproduction of the video data and the audio data recorded in the DVD, based on the control signal, the suspension control signal, and the resumption control signal when the light reception section 11 receives, from the server, the control signal, the suspension control signal and the resumption control signal, all of which are based on the operation signal. That is, the CPU 12 functions as a reproduction control tool by executing the reproduction control program 14A.

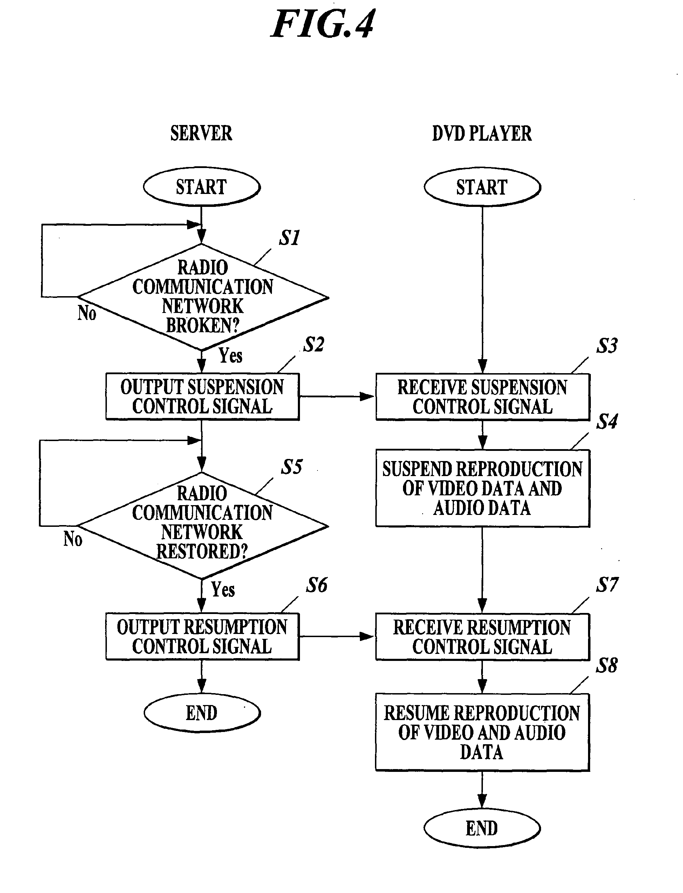

Suspension control operation and the resumption control operation will be explained hereunder referring to a flowchart shown in FIG. 4.

In the server 2, the CPU 24 determines, by executing the detection program 26B, whether or not the breakage of the connection by the radio communication network has occurred (Step S1).

In Step 1, in the case that the CPU 24 determines that the connection by the radio communication network is not broken (Step S1; No), the CPU 24 continues to perform the process of the Step S1 at predetermined time intervals. In Step 1, in the case that the CPU 24 determines that the connection by the radio communication network is broken (Step 1; Yes), the CPU 24 executes the suspension control program 26C to control the signal generating circuit 23 so that the latter generates the suspension control signal, and to control the light emission section 21 so that the latter outputs the suspension control signal to the DVD player 1 (Step S2).

In the DVD player 1, in the case that the light reception part 11 receives the suspension control signal (Step S3), the CPU executes the reproduction control program 14A and suspends the reproduction of the video data and audio data at the position where the reproduction is being performed (Step S4).

Then, in the server 2, the CPU 24 executes the detection program 26B and determines whether or not the connection by the radio communication network has been restored (Step S5).

In Step S5, in the case that the CPU 24 determines that the connection by the radio communication network is not restored (Step S5; No), the CPU 24 continues to perform the process of the Step S5 at predetermined time intervals.

In Step S5, in the case that the CPU 24 determines that the connection by the radio communication network is restored (Step S5; Yes), the CPU executes the resumption control program 26D and controls the signal generating circuit 23 so that the latter generates the resumption control signal, and further controls the light emission section 21 so that it outputs the resumption control signal to the DVD player 1 (Step S6).

In the next place, in the DVD player 1, if the light reception part 11 receives the resumption control signal (Step S7), the CPU, by executing the resumption control program 14A, causes the DVD player 1 to resume the reproduction of the video data and audio data from the position where the reproduction was suspended (Step S8).

The reproduction system 100 and the server 2 according to the invention, in the server 2, the CPU 24 executes the detection program 26B and (1)in the case that the breakage of the connection by the radio communication network between the server 2 and the television receiver 3 is detected, the CPU 24 executes the suspension control program 26C for controlling the signal generating circuit 23 so that the signal generating circuit generates the suspension control signal for temporarily stopping the reproduction of the video data and the audio data by the DVD player 1, and (2)in the case that the restoration of the connection by the radio communication network between the server 2 and the television receiver 3 is detected, the CPU 24 executes the resumption control program 26D for controlling the signal generating circuit 23 so that the signal generating circuit 23 generates the resumption control signal for resuming the reproduction of the video data and the audio data by the DVD player. The suspension control signal and the resumption control signal are outputted to the DVD player 1 by the light emission section 21 which outputs, in the form of light energy, the operation signal received from the television receiver 3 to the DVD player 1. In the DVD player, as these suspension control signal and resumption control signal are received by the light reception section 11 of the DVD player 1 and the CPU 12 executes the reproduction control program 14A, the reproduction of the video data and the audio data recorded in the DVD is controlled based on the suspension control signal and the resumption control signal received by the light reception section 11.

That is, the reproduction of the video data and the audio data by the DVD player 1 is temporarily stopped when the connection by the radio communication network between the server 2 and the television receiver 3 has been broken, and is resumed, from the position where the reproduction was temporarily stopped, when the breakage of the connection between the server 2 and the television receiver 3 by the radio communication network has been restored.

Accordingly, it would be possible for the reproduction system 100 and the server 2 according to the invention, to temporarily stop the reproduction of the video data and/or audio data by the DVD player 1 when the connection by the radio communication network between the server 2 and the television receiver 3 has been broken, and to resume more reliably the reproduction of the video data and audio data from the position where the reproduction of those data were temporarily stopped when the breakage of the connection occurred. Therefore, the reproduction of those data is resumed from a preferable position even in the case that the connection between the server and the television receiver by the radio communication network has been broken.

Moreover, as the suspension control signal and the resumption control signal are outputted to the DVD player 1 in the form of light energy by the light emission section 21 which outputs the operation signals received from the television receiver 3, the light emission section 21 in existence can be utilized for outputting the suspension control signal and the resumption control signal to the DVD player 1. Accordingly, outputting the suspension control signal and the resumption control signal can be easily realized.

Although the DVD player 1 is exemplified as a reproduction device in the above explanation, it should be noted that the reproduction device is not limited to the DVD player and other devices such as a video player and a digital tuner can be also used. Further, a plurality of the reproduction device may be connected to the server, as the need arises.

## Claims

1. A reproduction system comprising a reproduction device to reproduce video data and/or audio data recorded in a recording medium, and a server which is connected to the reproduction device and transmits, through a radio communication network, the video data and/or audio data reproduced by the reproduction device to a client terminal unit, wherein the server comprises:
a breakage detecting part to detect a breakage of connection by the radio communication network between the server and the client terminal unit;
a suspension control signal generating part to generate a suspension control signal to make the reproduction device temporarily stop reproduction of the video data and/or audio data by the reproduction device, when the breakage of connection by the radio communication network between the server and the client terminal unit is detected by the breakage detecting part;
a reconnection detecting part to detect reconnection by the radio communication network between the server and the client terminal unit;
a resumption control signal generating part to generate a resumption control signal for making the reproduction device resume reproduction of the video data and/or audio data, when the reconnection by the radio communication network between the server and the client terminal unit is detected by the reconnection detecting part; and
a light emission section to output an operation signal received from the client terminal unit, to the reproduction device in a form of light, and further to output the suspension control signal and the resumption control signal to the client terminal unit, and
the reproduction device comprises:
a light reception section to receive the operation signal, the suspension control signal and the resumption control signal, which are outputted from the light emission section; and
a reproduction control part to control reproduction of the video data and/or audio data recorded in the recording medium, according to the operation signal, the suspension control signal and the resumption control signal, received by the light reception section.

2. A server which is connected to a reproduction device for reproducing video data and/or audio data recorded in a recording medium, and which transmits, through a radio communication network, the video data and/or audio data reproduced by the reproduction device to a client terminal unit, wherein the server comprises:
a breakage detecting part to detect a breakage of connection by the radio communication network between the server and the client terminal unit;
a suspension control part to generate a suspension control signal to make the reproduction device temporarily stop reproduction of the video data and/or audio data by the reproduction device, when the breakage of connection by the radio communication network between the server and the client terminal unit is detected by the breakage detecting part;
a reconnection detecting part to detect reconnection by the radio communication network between the server and the client terminal unit; and
a resumption control part to generate a resumption control signal for making the reproduction device resume reproduction of the video data and/or audio data, when the reconnection by the radio communication network between the server and the client terminal unit is detected by the reconnection detecting part.

3. The server as claimed in claim 2, further comprising a signal outputting section to output operation signals received from the client terminal unit to the reproduction device, wherein the suspension control signal and the resumption control signal are outputted from the signal outputting section to the reproduction device.

4. A reproduction system comprising a reproduction device to reproduce video data and/or audio data recorded in a recording medium, and a server which is connected to the reproduction device and transmits, through a radio communication network, the video data and/or audio data reproduced by the reproduction device to a client terminal unit, wherein the server comprises:
a breakage detecting part to detect a breakage of connection by the radio communication network between the server and the client terminal unit;
a suspension control part to generate a suspension control signal to make the reproduction device temporarily stop reproduction of the video data and/or the audio data by the reproduction device, when the breakage of connection has been detected by the breakage detecting part, and to output the suspension control signal to the reproduction device;
a reconnection detecting part to detect reconnection by the radio communication network between the server and the client terminal unit; and
a resumption control part to generate a resumption control signal for resuming the reproduction of the video data and/or audio data by the reproduction device, when the reconnection by the radio communication network between the server and the client terminal unit is detected by the reconnection detecting part, and to output the resumption control signal to the reproduction device; and
the reproduction device comprises:
a signal reception section to receive the suspension control signal and the resumption control signal outputted from the server; and
a reproduction control part to control reproduction of the video data and/or audio data recorded in the recording medium, according to the suspension control signal and the resumption control signal which are received by the signal reception section.
